# EUROPÄISCHE PATENTSCHRIFT

(11) **EP 0 320 488 B1**
(45) Veröffentlichungstag und Bekanntmachung des Hinweises auf die Patenterteilung: **11.08.1993**
(21) Anmeldenummer: 88890308.5
(22) Anmeldetag: 05.12.1988
(51) Int. Cl.: B21J 13/03, B30B 15/02

(54) **Spanneinrichtung für Pressenwerkzeuge**
Clamping device for press tools
Dispositif de serrage pour outils de presse

(30) Priorität: 09.12.1987 AT 3234/87
(43) Veröffentlichungstag der Anmeldung: 14.06.1989
(73) Patentinhaber: LAEIS + BUCHER GmbH, D-54290 Trier (DE); Veitscher Magnesitwerke-Actien-Gesellschaft, A-1010 Wien (AT)
(72) Erfinder: Ribar, Norbert, A-1200 Wien (AT); Zottel, Gerhard, A-1210 Wien (AT); Baumgartner, Walter, Dipl.-Ing., A-8664 Gross Veitsch 138 (AT); Schröding, Josef, Dipl.-Ing., A-8663 Dorf Veitsch 43 (AT)

(56) Entgegenhaltungen:
- EP-A- 0 310 692
- DE-A- 2 544 711
- FR-A- 2 195 492
- US-A- 3 321 807
- US-A- 3 545 044
- US-A- 3 782 166
- SOVIET INVENTIONS ILLUSTRATED, Section M/G, week 84/15, 23 May 1984 DerwentPublications Ltd., London GB

## Beschreibung

Die Erfindung betrifft eine Spanneinrichtung für Pressenwerkzeuge, mit einer mindestens einen Stempel tragenden Stempelaufnahmeplatte, die über als Spannmagnete ausgebildete Spannelemente mit einer von der Presse betätigten Stempelwerkzeugplatte lösbar verbunden ist.

Ublicherweise trägt eine Stempelaufnahmeplatte einen bis drei Preßstempel. Die Stempelaufnahmeplatte wird an der Kolbendruckplatte lösbar befestigt; diese Verbindung soll eine Justiermöglichkeit der Stempelaufnahmeplatte zur Matrize des Schwebetisches möglich machen.

Zur Verkürzung der Umrüstzeit, d.h. jener Zeitspanne, die notwendig ist, um die Stempelaufnahmeplatte durch eine andere zu ersetzen, wird in der AT-PS 382 095 ein halbautomatisches Spannsystem vorgeschlagen, bei welchem das Beschicken und Justieren von Hand aus, das Verriegeln und das Spannen selbsttätig erfolgt. Zu diesem Zweck ist in der Kolbendruckplatte ein hydraulisch verschiebbarer und verdrehbarer Spannkolben zum Verschwenken und Anziehen eines Hammerkopfes vorgesehen, der an der Stempelwerkzeugplatte angreift. Der Aufbau dieses Spannsystems ist relativ kompliziert und aufwendig.

Durch die DE-OS 25 44 711 ist eine Stempelaufnahmeplatte bekannt geworden, die gegenüber der Stempelwerkzeugplatte zentriert und gegen seitliches Verschieben gesichert ist. Bei dieser Konstruktion ist eine genaue Lage des Stempels gegenüber der Matrize erforderlich. Gemäß der DD-PS 220 522 sind hiefür zusätzliche Zentrierstifte vorgesehen. Bei diesen bekannten Konstruktionen ist es nicht möglich, das Werkzeug gegenüber dem Gegenwerkzeug nachträglich zu justieren.

Auch bei der Anordnung gemäß der US-PS 3 782 166, die den nächstkommenden Stand der Technik darstellt, sind der Stempel und die Matrize gegen seitliches Verschieben gegenüber der Stempelaufnahmeplatte und der Grundplatte dadurch gesichert, daß sie in Schablonen eingesetzt und gehalten sind, welche ihrerseits durch Zentrierstifte gegen seitliches Verschieben gesichert sind. Gehalten werden der Stempel und die Matrize gemäß dieser Konstruktion durch Dauermagnete, welche zwischen den Stempel bzw. die Matrize und die jeweilige Aufnahmeplatte eingesetzt sind. Aufgrund der punktuellen Anordnung der Magnete, die über die jeweilige Aufnahmeplatte hinausragen, würde bei dieser Konstruktion eine hohe Druckbelastung zu Beschädigungen der Magnete oder der durch sie verbundenen Bauteile führen. Überdies ist analog wie bei den Konstruktionen gemäß der DE-OS 25 44 711 und der DD-PS 220 522 eine nachträgliche Justierung von Stempel oder Matrize gegeneinander bzw. gegenüber den jeweiligen Aufnahmeplatten nicht möglich.

Aufgabe der Erfindung ist es, diesen Nachteil zu beseitigen und eine Möglichkeit zu schaffen, das Presswerkzeug gegenüber dem Unterwerkzeug bzw. der Matrize in der Presse im eingebauten Zustand zu justieren. Diese Aufgabe wird bei einer Spannvorrichtung der eingangs genannten Art erfindungsgemäß dadurch gelöst, daß die Spannmagnete mit der Kontaktfläche der Stempelwerkzeugplatte zur Stempelaufnahmeplatte eine gemeinsame Ebene bilden und daß die Spannmagnete in Aussparungen der Stempelwerkzeugplatte angeordnet sind, wobei die Aussparungen außerhalb des Bereiches der Druckkraftübertragung von der Stempelwerkzeugplatte auf die danach angeordnete Stempelaufnahmeplatte liegen.

Die Verwendung von als Elektropermanentmagnete ausgebildeten Spannmagneten hat den Vorteil, daß bei Stromausfall die Haftkraft erhalten bleibt und durch ein Umsteuergerät jederzeit gelöst werden kann.

Vorzugsweise sind seitliche Fanghaken vorgesehen, welche die Stempelaufnahmeplatte untergreifen. Dieses Merkmal schafft eine Sicherung, falls die Bedienungsperson versehentlich auf den Auslöseknopf drückt.

Weiters ist es Gegenstand der Erfindung, daß jeder Spannmagnet über eine elastische Zwischenlage oder mehrere Tellerfedern mittels abgesetzter Schrauben an der Zwischenplatte befestigt ist. Dies bringt den Vorteil, daß bei Verschmutzung der Stempelaufnahmeplatte oder Abnützung der Stempelwerkzeugplatte oder der Magnete der Kraftfluß erhalten bleibt.

Die Erfindung wird nachfolgend anhand eines Ausführungsbeispiels mit Hilfe der Zeichnungen beschrieben. Es zeigen
- Fig. 1: eine erfindungsgemäße Spanneinrichtung in Vorderansicht,
- Fig. 2: eine Unteransicht der Spanneinrichtung nach Fig. 1, und
- Fig. 3: eine Teilvorderansicht gemäß einer Variante der Erfindung teilweise im Schnitt.

Die Beschreibung erfolgt für den Oberstempel einer Oberstempelpresse, die Erfindung kann aber auch für den Unterstempel bzw. für die Stempel einer Unterkolbenpresse eingesetzt werden. Für den Oberstempel einer Unterkolbenpresse ist sinngemäß statt "Kolbendruckplatte" der Begriff "Oberholm" zu setzen, beim Unterstempel einer Oberkolbenpresse der Begriff "Unterholm".

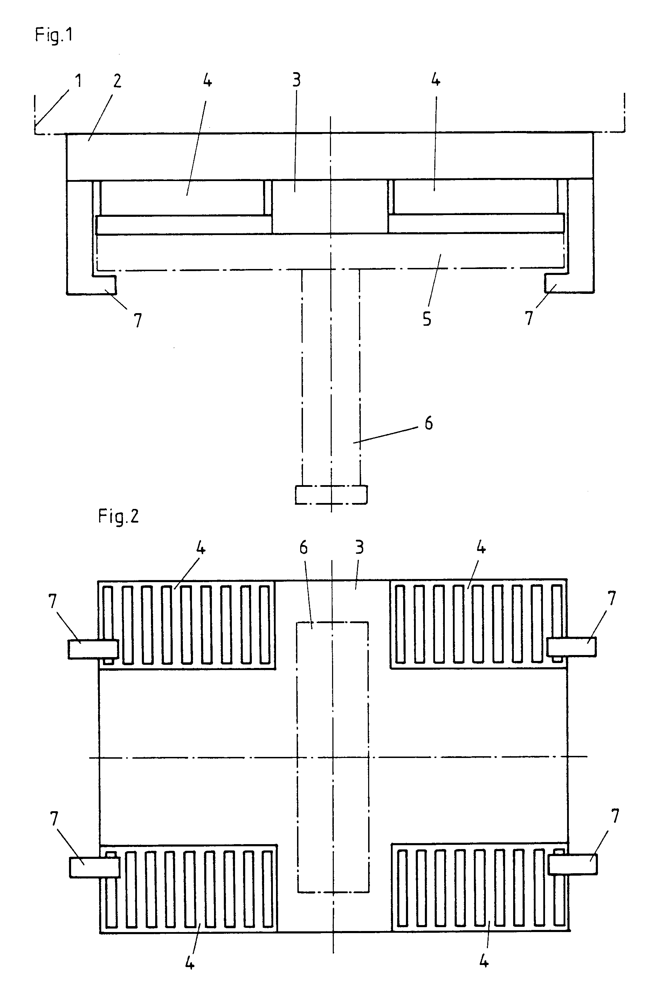

In Fig. 1 bezeichnet 1 eine Kolbendruckplatte, die auf ihrer Unterseite eine Zwischenplatte 2 trägt, wobei die Verbindung durch Schrauben (nicht dargestellt) erfolgt. Auf der Unterseite der Zwischenplatte 2 ist einerseits eine Stempelwerkzeugplatte 3, sowie eine Mehrzahl von Spannmagneten 4 herkömmlicher Bauart befestigt, z.B. mittels Schrauben (nicht dargestellt), wobei die Spannmagnete 4 im wesentlichen die gleiche Höhe wie die Stempelwerkzeugplatte 3 aufweisen und die Stempelwerkzeugplatte 3 entsprechende Ausnehmungen für die Aufnahme der Spannmagnete 4 aufweist. Wie aus Fig. 2 ersichtlich ist, sind in diesem Ausführungsbeispiel vier rechteckförmige Spannmagnete in den Ecken der Stempelwerkzeugplatte 3 angeordnet, sodaß letztere eine Kreuzform aufweist.

Mit strichpunktierten Linien ist eine Stempelaufnahmeplatte 5 dargestellt, die z.B. einen Stempel 6 trägt.

Aus Sicherheitsgründen (z.B. bei Ausfall, Fehlbedienung od.dgl.) sind seitlich z.B. vier starre Fanghaken 7 vorgesehen, die an der Zwischenplatte 2 befestigt sind und die Stempelaufnahmeplatte 5 übergreifen und somit ein Herabfallen der Stempelaufnahmeplatte 5 verhindern.

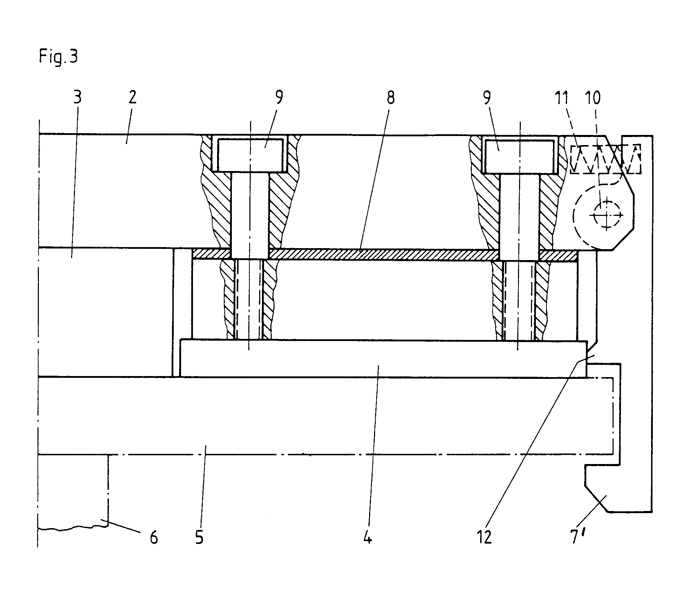

Fig. 3 zeigt eine Variante der Erfindung, bei der ein Spannmagnet 4 über eine elastische Zwischenlage 8 mittels abgesetzter und versenkt angeordneter Inbusschrauben 9 an der Zwischenplatte 2 befestigt ist. Als Material für die Zwischenlage 8 dient Gummi oder Vulkollan. Anstelle der Zwischenlage 8 können z.B. auch mehrere Tellerfedern verwendet werden. Die elastische Zwischenlage 8 hat den Zweck, daß bei eventuellen elastischen Verformungen der Stempelwerkzeugplatte 3 bei hoher Druckbelastung (bis zu 15 kg/mm²) keine Druckkräfte auf die Spannmagnete 4 ausgeübt werden, da es ansonsten zu Beschädigungen der Spannmagnete 4 kommen könnte. Die Druckübertragung auf die Stempelaufnahmeplatte 5 erfolgt über die kreuzförmig ausgebildete Stempelwerkzeugplatte 3, d.h., auf die Spannplatten 4 wird kein Preßdruck ausgeübt.

Beim Beispiel nach Fig. 1 und 2 mit den starren Fanghaken 7 erfolgt der Ein- und Ausbau der Stempelaufnahmeplatte 5 seitlich.

Beim Beispiel nach Fig. 3 ist der Fanghaken 7′ schwenkbar ausgeführt, sodaß der Einbau von unten und der Ausbau seitlich erfolgen kann. Der Fanghaken 7′ ist in einem Lager 10 auf der Zwischenplatte 2 gelagert und wird durch eine Druckfeder 11 auf Anschlag gegen z.B. den Spannmagnet 4 gehalten, u.zw. über einen Vorsprung 12.

Als Spannmagnete 4 werden vorzugsweise handelsübliche Elektro-Permanentmagnet-Spannplatten verwendet, die elektrisch ein- und ausschaltbar sind und eine hohe Haltekraft aufweisen.

Die Montage der einzelnen Teile erfolgt in der Weise, daß zuerst die Spannmagnete 4 an der Zwischenplatte 2 angeschraubt werden, worauf letztere an die Kolbendruckplatte 1 angeschraubt wird. Im nächsten Schritt wird die Stempelwerkzeugplatte 3 an die Zwischenplatte 2 angeschraubt. Nun erfolgt ein gleichzeitiges Schleifen der Unterseiten der Spannmagnete 4 und der Stempelwerkzeugplatte 3, damit eine vollständig ebene Auflagefläche für die Stempelaufnahmeplatte 5 entsteht, die anschließend eingebaut, und durch die Spannmagnete 4 gehalten wird.

Für Justierzwecke werden die Spannmagnete 4 entsprechend aus- und eingeschaltet bzw. in ihrer Spannkraft soweit reduziert, daß die Stempelaufnahmeplatte verschoben werden kann.

Anstelle oder neben der Feder 11 bei der Variante nach Fig. 3 kann auch ein elektrischer, pneumatischer oder hydraulischer Antrieb vorgesehen sein, der den Fanghaken 7′ beim Ein- und Ausbau der Stempelaufnahmeplatte 5 verschwenkt.

## Patentansprüche

1. Spanneinrichtung mit einer mindestens einen Stempel (6) tragenden Stempelaufnahmeplatte (5), die über als Spannmagnete (4) ausgebildete Spannelemente mit einer von der Presse betätigten Stempelwerkzeugplatte (3) lösbar verbunden ist, dadurch gekennzeichnet, daß die Spannmagnete (4) mit der Kontaktfläche der Stempelwerkzeugplatte (3) zur Stempelaufnahmeplatte (5) eine gemeinsame Ebene bilden und daß die Scannmagnete (4) in Aussparungen der Stempelwerkzeugplatte (3) angeordnet sind, wobei die Aussparungen außerhalb des Bereiches der Druckkraftübertragung von der Stempelwerkzeugplatte (3) auf die danach angeordnete Stempelaufnahmeplatte (5) liegen.

2. Spanneinrichtung nach Anspruch 1, dadurch gekennzeichnet, daß die Spannmagnete (4) als Elektropermanentmagnete ausgebildet sind.

3. Spanneinrichtung nach Anspruch 1, dadurch gekennzeichnet, daß die Stempelwerkzeugplatte (3) eine Kreuzform aufweist.

4. Spanneinrichtung nach Anspruch 1, dadurch gekennzeichnet, daß seitliche Fanghaken (7, 7') vorgesehen sind, welche die Stempelaufnahmeplatte (5) untergreifen.

5. Spanneinrichtung nach Anspruch 4, dadurch gekennzeichnet, daß die Fanghaken (7') um ein Lager (10) schwenkbar gelagert und jeweils durch eine Druckfeder (11) auf einen Anschlag gehalten sind.

6. Spanneinrichtung nach Anspruch 1, dadurch gekennzeichnet, daß jeder Spannmagnet (4) über eine elastische Zwischenlage (8) oder mehrere Tellerfedern mittels abgesetzter Schrauben (9) an der Zwischenplatte (2) befestigt ist.

7. Spanneinrichtung nach Anspruch 5, dadurch gekennzeichnet, daß die Fanghaken (7') durch einen elektrischen, pneumatischen oder hydraulischen Antrieb verschwenkbar sind.

## Claims

1. Clamping device comprising a die plate (5) carrying at least one die (6) and releasably connected via clamping elements in the form of clamping magnets (4) to a tool plate (3) actuated by the press, characterized in that the clamping magnets (4) form a common plane with the surface of contact between the tool plate (3) and the die plate (5) and that the clamping magnets (4) are arranged in recesses in the tool plate (3), the recesses being situated outside the region of the transfer of force from the tool plate (3) to the die plate (5) arranged thereafter.

2. Clamping device according to claim 1, characterized in that the clamping magnets (4) are electropermanent magnets.

3. Clamping device according to claim 1, characterized in that the tool plate (3) is cross-shaped.

4. Clamping device according to claim 1, characterized in that lateral catch hooks (7, 7') are provided which engage the die plate (5) at the bottom.

5. Clamping device according to claim 4, characterized in that the catch hooks (7') are pivotally mounted in a bearing (10) and are each held on a stop by a compression spring (11).

6. Clamping device according to claim 1, characterized in that each clamping magnet (4) is secured to the intermediate plate (2) by means of shouldered screws (9) via an elastic intermediate layer (8) or a plurality of disc springs.

7. Clamping device according to claim 5, characterized in that the catch hooks (7') can be pivoted by an electric, pneumatic or hydraulic drive.

## Revendications

1. Dispositif de serrage muni d'une plaque réceptrice (5) qui porte au moins un bloc presseur (6) et est reliée de manière libérable, par l intermédiaire d'éléments de blocage réalisés sous la forme d'aimants de blocage (4), à une plaque d'outillage (3) à bloc presseur actionnée par la presse, caractérisé par le fait que les aimants de blocage (4) forment un plan commun avec la surface de contact de la plaque d'outillage (3) à bloc presseur avec la plaque (5) réceptrice du bloc presseur ; et par le fait que les aimants de blocage (4) sont logés dans des échancrures de la plaque d'outillage (3) à bloc presseur, les échancrures étant situées à l'extérieur de la zone de transmission de la force de pression, de la plaque d'outillage (3) à bloc presseur à la plaque (5) recevant le bloc presseur et agencée en aval.

2. Dispositif de serrage selon la revendication 1, caractérisé par le fait que les aimànts de blocage (4) sont réalisés sous la forme d'électro-aimants permanents.

3. Dispositif de serrage selon la revendication 1, caractérisé par le fait que la plaque d'outillage (3) à bloc presseur présente une configuration cruciforme.

4. Dispositif de serrage selon la revendication 1, caractérisé par la présence de crochets latéraux d'emprisonnement (7, 7'), qui viennent en prise par-dessous avec la plaque (5) réceptrice du bloc presseur.

5. Dispositif de serrage selon la revendication 4, caractérisé par le fait que les crochets d'emprisonnement (7') sont montés à pivotement autour d'un pivot (10), et sont respectivement retenus contre une butée par l intermédiaire d'un ressort de pression (11).

6. Dispositif de serrage selon la revendication 1, caractérisé par le fait que chaque aimant de blocage (4) est fixé à la plaque intermédiaire (2), au moyen de boulons étagés (9), par l'entremise d'une couche intercalaire élastique (8) ou de plusieurs rondelles élastiques.

7. Dispositif de serrage selon la revendication 5, caractérisé par le fait que les crochets d'emprisonnement (7') peuvent être animés de pivotements par l'intermédiaire d'un entraînement électrique, pneumatique ou hydraulique.
